# EUROPEAN PATENT APPLICATION

(11) **EP 4 276 027 A1**
(43) Date of publication of application: **15.11.2023**
(21) Application number: 23169449.8
(22) Date of filing: 24.04.2023
(51) Int. Cl.: B65C 3/02, B65C 3/10

(54) **TEST TUBE LABELING APPARUTUS AND TEST TUBE LABELING METHOD**

(30) Priority: 02.05.2022 KR 20220054252
(71) Applicant: Energium Co., Ltd., 08504 Seoul (IT)
(72) Inventor: LEE, Kang Hee, 08504 Seoul (KR); BAE, Yong Tak, 08504 Seoul (KR); JEONG, Yoo seok, 08504 Seoul (KR)
(74) Representative: Tiburzi, Andrea

(57) **Abstract**

A test tube labeling apparatus (100) for attaching a label (20) to a test tube (10) including a tube (12) and a cap (11) fastened to the tube , which includes a body (101); a seating portion (200) where test tubes inserted into the test tube labeling apparatus are seated and at least a portion of the seating portion is formed to correspond to the outer appearance of the test tube; a rotation driving unit (240) that rotates the seating portion relative to the body in response to the test tube being seated on the seating portion; a contact sensor (230) that is rotatably fixed with respect to the body at a position corresponding to the upper portion of the seating portion and detects a contact with the test tube seated in the seating portion; an angle sensor (210) for measuring rotation angle information of the rotation driving unit; a label attaching device (300) located inside the body and attaching a label to the test tube; and a processor operatively coupled to the rotation driving unit (240), the contact sensor (230), the angle sensor (210), and the label attaching device (300), wherein the contact sensor generates a contact signal when the test tube contacts with the contact sensor because of rotation of the seating portion, the angle sensor generates rotation angle information of the angle at which the rotation driving unit has rotated during a period from the time when the rotation driving unit starts driving the rotation in response to the test tube being seated on the seating portion to the time when the contact sensor generates a contact signal, and the processor receives the rotation angle information generated by the angle sensor, identifies the outer diameter information of the test tube based on the received rotation angle information, identifies the test tube by comparing the identified outer diameter information with the test tube identification information stored in advance, identifies the labeling information corresponding to the identified test tube, and controls the labeling apparatus so that the label printed with the identified test tube labeling information may be attached to the identified test tube.

## Description

### [Technical Field]

Various embodiments disclosed in this document relate to a test tube labeling apparatus and a test tube labeling method.

### [Background Art]

Test tubes are used to store various samples such as blood, animal and plant specimens, chemicals, and the like, and labels may be attached to display information about the samples in the test tubes.

The work of attaching labels to a large number of test tubes requires a considerable amount of workload, and when performed by a person, the quality of the work result may be reduced, or a situation of erroneous attachment may occur.

An automation device may be used to reduce the amount of labeling work and improve accuracy and quality.

### [Disclosure]

### [Technical Problem]

A labeling apparatus may be used to label a plurality of test tubes. Test tubes can be put into a test tube labeling apparatus and automatically be labeled.

A test tube for storing various samples such as blood, animal and plant specimens, chemicals, and the like may include a tube in which the sample is stored, and a cap fastened to the tube to seal the sample. The outer diameter of the tube, the total length of the tube, and the color of the cap may vary depending on the manufacturer of the test tube.

In an embodiment, various types of test tubes may be used for each type of examination or test. To properly label the test tube, the test tube put into the test tube labeling apparatus must be specified in the test tube labeling apparatus, and the label to be attached to the test tube must be determined based on the specified test tube. For example, the test tube labeling apparatus may specify a test tube put into the test tube labeling apparatus based on the color of the test tube cap and/or the total length of the test tube and determine a label to be attached to the test tube based on the specified test tube.

Meanwhile, the total length of the test tube, the outer diameter of the test tube, and the color of the test tube cap may be different for each manufacturer. Therefore, if the test tube put into the test tube labeling apparatus is specified only through the color of the test tube cap and/or the total length of the test tube, there may be a constraint that only a specific type of test tube manufactured by a specific manufacturer should be used and so the types of test tubes which can be used in the test tube labeling apparatus could be limited.

In various embodiments disclosed in this document, a method for using various types of test tubes in the test tube labeling apparatus may be proposed. Accordingly, the types of test tubes that can be used in the test tube labeling apparatus may be diversified.

### [Technical Solution]

A test tube labeling apparatus for attaching a label to a test tube including a tube and a cap fastened to the tube according to various embodiments disclosed in this document may include a body; a seating portion where test tubes inserted into the test tube labeling apparatus are seated and at least a portion of the seating portion is formed to correspond to the outer appearance of the test tube; a rotation driving unit that rotates the seating portion relative to the body in response to the test tube being seated on the seating portion; a contact sensor that is rotatably fixed with respect to the body at a position corresponding to the upper portion of the seating portion and detects a contact with the test tube seated in the seating portion; an angle sensor for measuring rotation angle information of the rotation driving unit; a label attaching device located inside the body and attaching a label to the test tube; and a processor operatively coupled to the rotation driving unit, the contact sensor, the angle sensor, and the label attaching device, wherein the contact sensor generates a contact signal when the test tube contacts with the contact sensor because of rotation of the seating portion, the angle sensor generates rotation angle information of the angle at which the rotation driving unit has rotated during a period from the time when the rotation driving unit starts driving the rotation in response to the test tube being seated on the seating portion to the time when the contact sensor generates a contact signal, and the processor receives the rotation angle information generated by the angle sensor, identifies the outer diameter information of the test tube based on the received rotation angle information, identifies the test tube by comparing the identified outer diameter information with the test tube identification information stored in advance, identifies the labeling information corresponding to the identified test tube, and controls the labeling apparatus so that the label printed with the identified test tube labeling information may be attached to the identified test tube.

A method for attaching a label to a test tube including a tube and a cap fastened to the tube,the method comprising: receiving,by a processor,a detection signal generated in the detection sensor fixed to the body as the test tube is put into the body of the test tube labelling apparatus; identifying,by the processor,that the test tube is inserted into the body based on the received detection signal; controlling,by the processor,a rotation driving unit connected to a seating portion so that the seating portion where the test tube is seated may be rotated with respect to the body based on the received detection signal;receiving ,by the processor,the detection signal generated according to the contact of the contact sensor fixed to the body with the test tube by the rotation of the seating portion; receiving,by the processor,the rotation angle information of the rotation driving unit from an angle sensor from the time when the rotation driving unit starts driving the rotation to the time when the contact signal is generated in the contact sensor; identifying,by the sensor,the outer diameter information of the test tube based on the received rotation angle information; identifying the test tube by comparing information on the outer diameter information of the test tube with the test tube identification information stored in advance; and controlling a label attaching device located in the inner space of the body so that the labeling information corresponding to the identified test tube may be identified and the label printed with the identified test tube labeling information may be attached to the identified test tube.

### [Advantageous Effects]

According to various embodiments disclosed in this document, the test tube labeling apparatus may specify a test tube inserted into the test tube labeling apparatus by additionally considering factors other than the total length of the test tube and the color of the test tube cap. For example, the test tube labeling apparatus may identify the test tube inserted into the test tube by identifying the outer diameter of the test tube inserted into the test tube in real time. Therefore, unlike the comparative embodiment in which only a specific type of test tube was used in the test tube labeling apparatus, various types of test tubes may be used in the test tube labeling apparatus.

In addition, the accuracy of specifying the test tube inserted into the test tube labeling apparatus can be improved and the label containing the correct information can be attached to the test tube as the test tube labeling apparatus identifies the test tube in consideration of the total length of the test tube, the outer diameter of the test tube, and the color of the cap of the test tube.

### [Description of Drawings]

In connection with the description of the drawings, the same or similar reference numerals may be used for the same or similar elements.
FIG. 1 is a perspective view of a test tube labeling apparatus according to various embodiments disclosed in this document.
FIG. 2 is a flowchart illustrating a series of processes in which a label is attached to a test tube.
FIGS. 3a and 3b are perspective views of an inlet portion of a test tube labeling apparatus according to various embodiments disclosed in this document.
FIG. 3c is a cross-sectional view of the test tube labeling apparatus of FIG. 1 taken along the line A-A.
FIG. 4 is a view illustrating a seating portion according to various embodiments disclosed in this document.
FIG. 5a is a front perspective view of a labeling module of a test tube labeling apparatus according to various embodiments disclosed in this document.
FIG. 5b is a diagram illustrating a length measuring device according to various embodiments disclosed in this document.
FIG. 6 is a rear perspective view of the labeling module of the test tube labeling apparatus according to various embodiments disclosed in this document.

### [Mode for Disclosure]

It should be appreciated that various embodiments of this document and the terms used therein are not intended to limit the technical features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things unless the relevant context clearly indicates otherwise.

As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., the first element) is referred to, with or without the term "operatively" or "communicatively", as "coupled with", "coupled to", "connected with", or "connected to" another element (e.g., the second element), it means that the element may be coupled with the other element directly (e.g., wiredly), wirelessly, or via the third element.

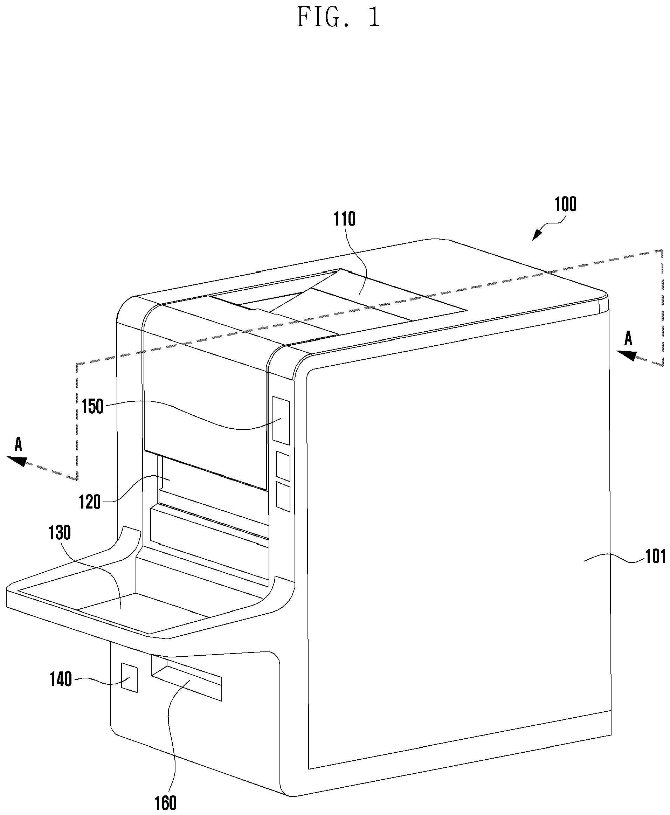

FIG. 1 is a perspective view of a test tube labeling apparatus 100 according to various embodiments disclosed in this document.

According to various embodiments disclosed in this document, a test tube 10 may be used to store various samples such as blood, animal and plant specimens, chemicals, and the like, and a label 20 may be attached. Personalized information such as patient information and/or sample information may be displayed on the label 20. As shown in FIG. 1, a test tube labeling apparatus 100 for attaching labels 20 to a plurality of test tubes 10 may be used to reduce the workload of attaching labels 20 to test tubes 10 and improve accuracy and quality.

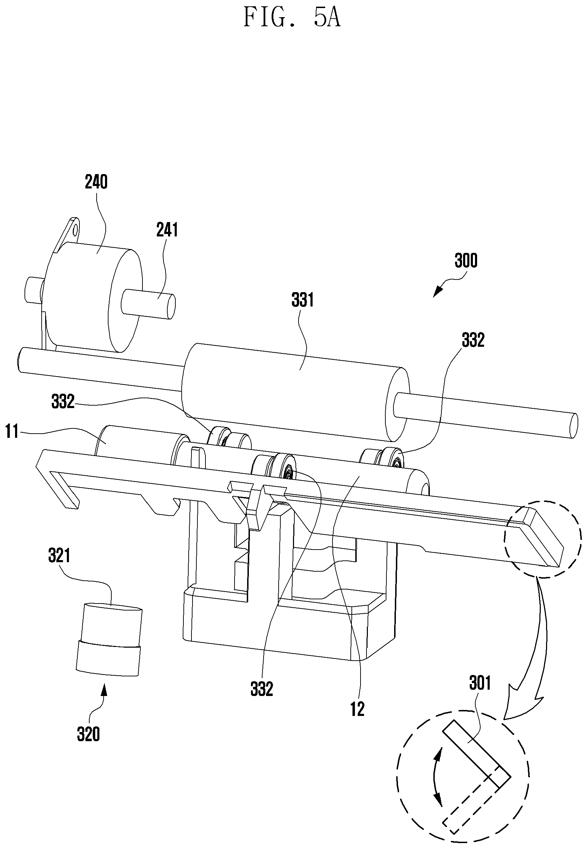

According to various embodiments, the test tube labeling apparatus 100 may include a body 101; an inlet portion 110; an outlet portion 120; a supporting part 130; a scan unit 140; an information display part 150; and/or a print unit 160. In an embodiment, at least one of the above-described components may be omitted or other components may be added. The body 101 may be a body of the test tube labeling apparatus 100 including an inlet portion 110, an outlet portion 120, and a support part 130. The inlet portion 110 may be a portion into which the test tube 10 is inserted. The outlet portion 120 may be a passage through which the test tube 10 to which the label 20 is attached is discharged to the outside of the test tube labeling apparatus 100 when the label 20 is attached to the test tube 10. With reference to FIG. 5a to be described later, the outlet portion 120 may be connected to the inside of the test tube labeling apparatus 100 as the tray 301 is opened. The supporting part 130 may be a part where the test tube 10 discharged from the outlet portion 120 is seated.

In an embodiment, the body 101 may include a detection sensor 220, a contact sensor 230, a seating portion 200, an angle sensor 210, a labeling module 300, and a label attaching device 330. The detection sensor 220 may be a sensor that detects the insertion of the test tube 10 into the inlet portion 110. The contact sensor 230 may be a sensor used to identify information on the outer diameter of the test tube 10. The seating portion 200 may be an instrument on which the test tube 10 inserted into the inlet portion 110 is seated. The angle sensor 210 may be a sensor used to identify an angle at which the seating portion 200 rotates. The labeling module 300 may include a length measuring device 310 that measures the total length of the test tube 10 and a camera 320 that captures the color of the cap 12 of the test tube 10. The labeling attaching device 330, as a device for attaching the label 20 to be attached to the test tube 10 to the test tube 10, may include a labeling roller 331 for attaching the label 20 to the test tube 10 and a moving device 332 for moving the test tube 10 to the labeling roller 331. At least one of the above components may be omitted or other components may be added. A detailed description of the various components included in the above-described body 101 will be described later.

In an embodiment, a barcode holding patient data may be recognized through the scan unit 140. The barcode may include patient information such as the patient's name, height, and purpose of use. In the case that the scan unit 140 recognizes the barcode containing the patient's data, the label 20 to be attached to the test tube 10 may be determined through the test tube labeling apparatus 100 based on the patient's information recorded in the barcode.

In an embodiment, the user may recognize the error through the information display unit 150 in the case that an error occurs during the operation of the test tube labeling apparatus. In an embodiment, when an error occurs in the test tube labeling apparatus 100, information about the error may be displayed on the information display unit 150. For example, light such as a flickering light or a warning light may be output to the information display unit 150. In contrast, when the test tube labeling apparatus 100 operates normally, a different light from when an error occurs in the test tube labeling apparatus 100 may be output on the information display unit 150. Accordingly, the user may recognize that the test tube labeling apparatus 100 operates normally. In addition, the user may recognize whether the test tube labeling apparatus 100 is operating normally or abnormally within various ranges that can be performed by a person skilled in the art.

In an embodiment, the label 20 on which the patient's data is displayed may be printed in the print unit 160. The print unit 160 may be used when the test tube 10 is not suitable for use in the test tube labeling apparatus 100. For example, when it is determined that the test tube 10 is not suitable for use in the test tube labeling apparatus 100, the user does not put the test tube 10 into the test tube labeling apparatus 100, and the label 20 printed in the print unit 160 may be directly attached to the test tube 10.

According to various embodiments, the test tube labeling apparatus 100 may include a processor (not shown) and a memory (not shown) electrically connected to the processor. In an embodiment, the processor may control at least one other component (e.g., hardware or software) of the test tube labeling apparatus 100 connected to the processor by executing a software (e.g., a program), and it may perform various data processing and calculation. For example, the processor may control each component by being electrically connected to a detection sensor 220, a contact sensor 230, an angle sensor 210, a rotation driving unit 240, a length measuring device 310, a camera 320, and a label attaching device 330 of the test tube labeling apparatus 100 to be described later. In addition, the processor may be electrically connected to various hardware or software of the test tube labeling apparatus 100. In an embodiment, as at least portion of data processing or calculation, the processor may store instructions or data received from other components in the memory. As will be described later, a plurality of parameters for specifying the test tube 10 may be stored in the memory. For example, test tube identification information for specifying the test tube 10 inserted into the test tube labeling apparatus 100 may be stored. The test tube identification information may be information for specifying the test tube 10 and include information on test tubes 10 manufactured by all test tube manufacturing companies. For example, the test tube identification information may include information on the total length of the test tube 10 for each shape of the test tube 10, information on the outer diameter of the test tube 10, and information on the color of the cap 12 of the test tube 10. As will be described later, the test tube labeling apparatus 100 may identify the test tube 10 inserted into the test tube labeling apparatus 100 by comparing the outer diameter information, the total length information, and the color information of the cap 12 of the test tube 10 inserted into the test tube labeling apparatus 100, with the test tube identification information. The processor may identify labeling information corresponding to the identified test tube 10 and control the label attaching device 330 to attach the label 20 on which the identified labeling information is printed to the identified test tube 10.

In the comparative embodiment, the test tube identification information may include only information on the total length of the test tube 10 and information on the color of the cap 12 of the test tube 10. In contrast, in the embodiment disclosed in this document, the test tube identification information may include information on the total length of the test tube 10, information on the outer diameter of the test tube 10, and information on the color of the cap 12 of the test tube 10. Accordingly, it is possible to specify various types of test tubes 10 other than a specific type of test tube 10, and to determine a label 20 to be attached to the specified test tube 10. Accordingly, various types of test tubes 10 may be used in the test tube labeling apparatus 100. Details on this will be described later.

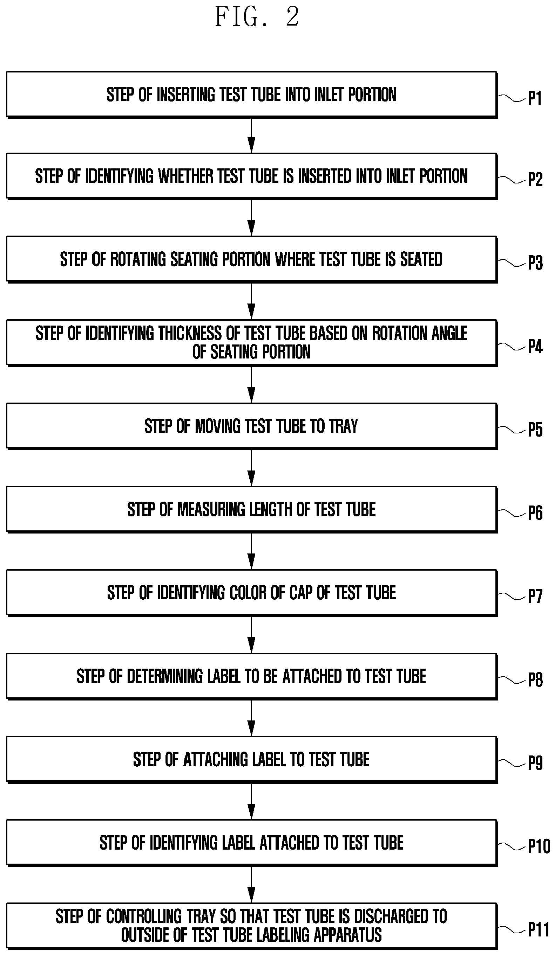

FIG. 2 is a flowchart illustrating a series of processes in which a label 20 is attached to a test tube 10.

According to various embodiments disclosed in this document, as shown in FIG. 2, a series of processes in which the label 20 is attached to the test tube 10 in the test tube labeling apparatus 100 may proceed as follows. After the user recognizes the barcode containing patient information in the scan unit 140, the user may insert the test tube 10 into the inlet portion 110 of the test tube labeling apparatus 100 (P1). The processor may determine whether the test tube 10 is inserted into the inlet portion 110 (P2). For example, the processor may determine whether the test tube 10 is inserted into the inlet portion 110 through a sensor (e.g., the detection sensor 220) disposed in the inlet portion 110. The test tube 10 may be inserted into the inlet portion 110 and be seated on the seating portion 200 disposed inside the body 101. When it is identified through the detection sensor 220 that the test tube 10 is inserted into the inlet portion 110, the processor assumes that the test tube 10 may be disposed in the seating portion 200 and control the rotation driving unit 240 connected to the seating portion 200. Accordingly, the seating portion 200 may rotate (P3) with respect to the body 101. As the test tube 10 rotates together with the seating portion 200, it may be contacted with another sensor (e.g., the contact sensor 230) fixed to the body 101. When the test tube 10 and the contact sensor 230 come into contact, the processor may receive rotation angle information of the seating portion 200 from the angle sensor 210 connected to the rotation driving unit 240. The processor may identify the outer diameter information of the tube 11 of the test tube 10 based on the received rotation angle information (P4). The test tube 10 may move to the tray 301 (P5) through the rotation of the seating portion 200. The processor may identify that the test tube 10 is placed on the tray 301 to control the length measuring device 310 and identify information on the total length of the test tube 10 (P6). In addition, the processor may control the camera 320 to identify the color information of the cap 12 of the test tube 10 (P7). The processor may identify the test tube 10 inserted into the test tube labeling apparatus 100 by comparing the outer diameter information of the tube 11 of the identified test tube 10, the total length information of the identified test tube 10, and the color information of the cap 12 of the identified test tube 10, with the test tube identification information stored in advance including information on the outer diameter of the tube 11 of the test tube 10, information on the total length of the test tube 10, and information on the color of the cap 12 of the test tube 10. The processor may identify the labeling information corresponding to the identified test tube 10 and determine the label 20 to be attached to the test tube 10 (P8). The processor may attach the label 20 printed with labeling information corresponding to the identified test tube 10 to the test tube 10 by controlling the label attaching device 330 (P9). The processor may control the scanner 400 and identify whether the label 20 attached to the test tube 10 is recognized (P10). When the label 20 is recognized through the scanner 400, the processor may control the tray 301 to discharge the test tube 10 to the outside of the test tube labeling apparatus 100 (P11). As the tray 301 is opened, the test tube 10 may pass through the outlet portion 120 and be seated on the supporting part 130. Hereinafter, each step in which the label 20 is attached to the test tube 10 described above and a configuration used in each step will be described in detail.

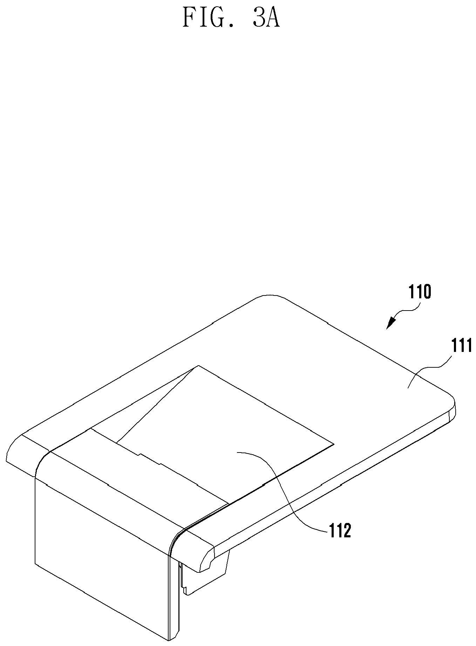

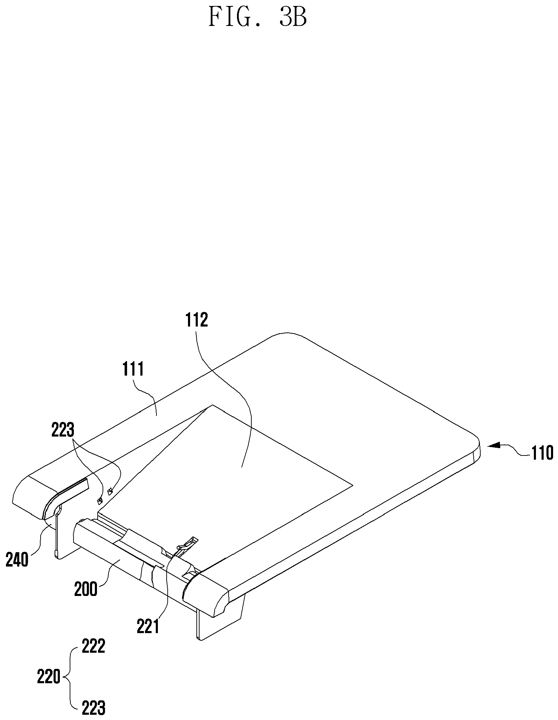

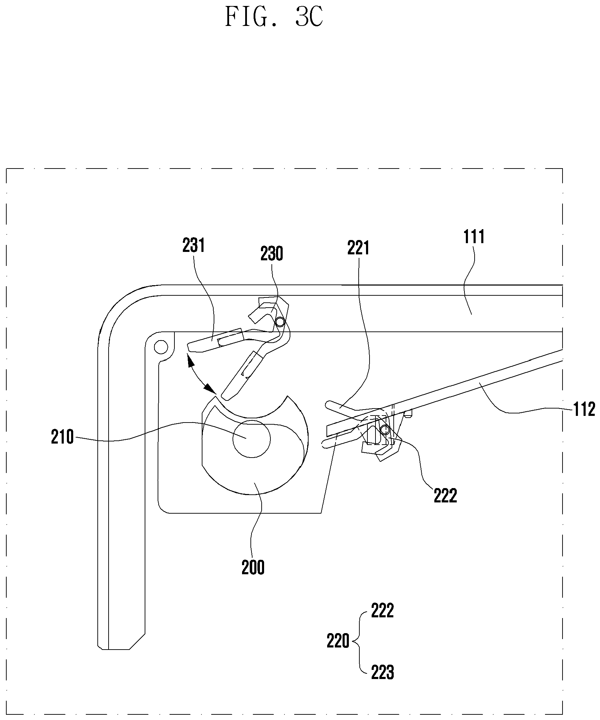

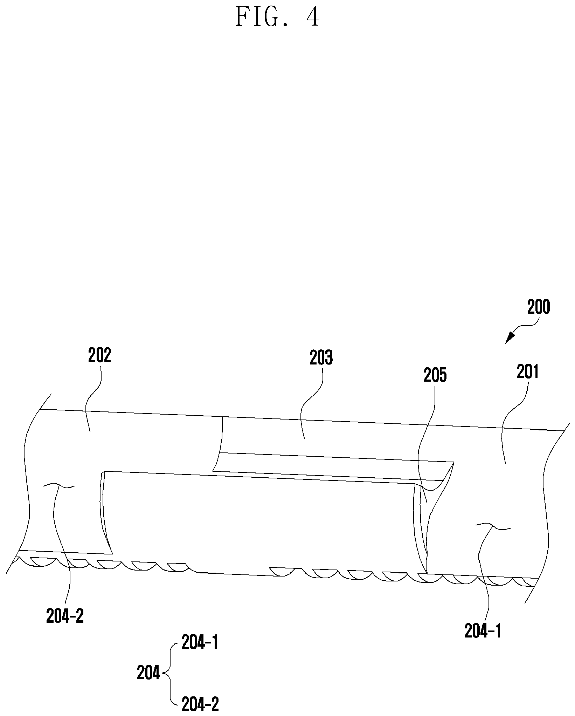

FIGS. 3a and 3b are perspective views of an inlet portion 110 of a test tube labeling apparatus 100 according to various embodiments disclosed in this document. FIG. 3c is a cross-sectional view of the test tube labeling apparatus 100 of FIG. 1 taken along the line A-A. FIG. 4 is a view illustrating a seating portion 200 according to various embodiments disclosed in this document.

According to various embodiments, the body 101 of the test tube labeling apparatus 100 may include an inlet portion 110 and an inclined surface 112. The inlet portion 110 may be a passage through which the test tube 10 is inserted into the body 101 of the test tube labeling apparatus 100. With reference to FIGS. 3a and 3b, the inlet portion 110 may include a cover member 111 and an inclined surface 112. At least a portion of the cover member 111 may configure the outer appearance of the test tube labeling apparatus 100. The inclined surface 112 may be formed on the cover member 111 and connected to the inside of the body 101. The test tube 10 may be guided to the seating portion 200 along the inclined surface 112. The test tube 10 may pass through the inlet portion 110 along the inclined surface 112 and be inserted into the body 101.

According to various embodiments, a detection sensor 220 detecting that the test tube 10 is inserted into the inlet portion 110 may be disposed in the body 101. The detection sensor 220 may be disposed on the body 101 to detect the insertion of the test tube 10 into the inlet portion 110. When the detection sensor 220 detects that the test tube 10 is inserted into the inlet portion 110, a detection signal may be generated. The processor may receive a detection signal generated by the detection sensor 220. The processor may identify that the test tube 10 is inserted into the inlet portion 110 based on the received detection signal. The processor may control the rotation driving unit 240 to rotate the seating portion 200 based on the received detection signal.

In an embodiment, the detection sensor 220 may include a first optical sensor 223 capable of detecting that the test tube 10 is inserted into the inlet portion 110 without contacting the test tube 10, and a physical sensor 222 that detects that the test tube 10 is inserted into the inlet portion 110 through physical contact with the test tube 10.

In an embodiment, the first optical sensor 223 may include a light receiving unit (not shown) and a light emitting unit (not shown). The first optical sensor 223 may include an infrared sensor. The first optical sensor 223 may sense that the test tube 10 is inserted into the inlet portion 110 as light generated from the light emitting unit is reflected by the test tube 10 and is incident to the light receiving unit. For example, in the first optical sensor 223, when light generated from the light emitting unit is reflected by the test tube 10 and is incident to the light receiving unit, a detection signal may be generated. The processor may determine whether the test tube 10 is inserted into the inlet portion 110 based on the detection signal generated by the first optical sensor 223.

In an embodiment, with reference to FIGS. 3b and 3c, the physical sensor 222 may include a first lever 221 pressed on the test tube 10. At least a portion of the first lever 221 may be located on the inclined surface 112 formed on the cover member 111 and move with respect to the inclined surface 112. The physical sensor 222 may detect that the test tube 10 is inserted into the inlet portion 110 using the first lever 221. With reference to FIG. 3c, the physical sensor 222 may sense that the test tube 10 is inserted into the inlet portion 110 as the first lever 221 contacts the test tube 10 and is pressed. For example, the physical sensor 222 may generate a detection signal when the first lever 221 is pressed by the test tube 10. The processor may determine whether the test tube 10 is inserted into the inlet portion 110 based on the detection signal generated by the physical sensor 222.

Meanwhile, when a portion of the test tube 10 is made of glass, the first optical sensor 223 may not detect that the test tube 10 is inserted into the inlet portion 110. For example, as light generated from the light emitting unit is reflected and/or refracted by the glass of the test tube 10, light may not be incident to the light receiving unit. Accordingly, the first optical sensor 223 may not detect whether the test tube 10 is inserted into the inlet portion 110. In this case, insertion of the test tube 10 into the inlet portion 110 may be sensed through the physical sensor 222. However, the detection sensor 220 is not limited to including both the first optical sensor 223 and the physical sensor 222. If necessary, the detection sensor 220 may include only one of the first optical sensor 223 and the physical sensor 222.

According to various embodiments, the seating portion 200 may be disposed inside the body 101. The test tube 10 inserted into the inlet portion 110 may be seated on the seating portion 200. The seating portion 200 may be connected to the rotation driving unit 240. The seating portion 200 may be coupled with the driving shaft 241 of the rotation driving unit 240 to rotate with respect to the body 101. The processor may rotate the seating portion 200 with respect to the body 101 in response to the seating of the test tube 10 on the seating portion 200. For example, as the test tube 10 is inserted into the inlet portion 110, the processor may determine that the test tube 10 is seated in the seating portion 200 based on a detection signal generated by the detection sensor 220, and it may control the rotation driving unit 240 so that the seating portion 200 rotates with respect to the body 101. For example, the processor may control the rotation driving unit 240 from the time when the detection signal generated by the detection sensor 220 is received and rotate the seating portion 200 with respect to the body 101. Accordingly, the test tube 10 may move to the tray 301 by rotating with respect to the body 101 together with the seating portion 200.

According to various embodiments, an angle sensor 210 may be connected to the rotation driving unit 240. The angle sensor 210 may be connected to the driving shaft 241 of the rotation driving unit 240 and measure rotation angle information of the driving shaft 241. Accordingly, the processor may identify the rotation angle information of the seating portion 200 based on the rotation angle information of the rotation driving unit 240 received from the angle sensor 210. Hereinafter, rotation angle information of the rotation driving unit 240 may refer to rotation angle information of the driving shaft 241 of the rotation driving unit 240. In an embodiment, the angle sensor 210 may be an encoder that detects rotation angle information of the rotation driving unit 240 based on an input electrical signal. The encoder may be embedded in the rotation driving unit 240 and detect rotation angle information of the driving shaft 241. In an embodiment, the encoder may be an absolute encoder that divides a specific angle range (e.g., 0 degrees to 360 degrees) at a constant ratio and detects rotation angle information of the rotation driving unit 240 through an electrical signal generated at each divided position. In addition, various types of encoders such as a magnetic encoder for detecting rotation angle information of the rotation driving unit 240 using a change in the magnetic field input to the encoder may be used. In the above description, it has been described on the premise that the angle sensor 210 is connected to the rotation driving unit 240, but this is not limited to connecting the angle sensor 210 to the rotation driving unit 240. In an embodiment, the angle sensor 210 may be connected to the seating portion 200. The processor may identify rotation angle information of the seating portion 200 received from the angle sensor 210 connected to the seating portion 200.

The label 20 to be attached to the test tube 10 may be different for each type of inspection or test. Here, the label 20 may include personalized information such as patient information and sample information. For example, in test A, a label 20 containing information a may be attached to the test tube 10, and in test B, a label 20 containing information b may be attached to the test tube 10. The test tube labeling apparatus 100 may first specify the test tube 10 inserted into the test tube labeling apparatus 100 to determine the label 20 to be attached to the test tube 10. For example, the test tube labeling apparatus 100 may specify the test tube 10 based on the shape of the test tube 10 inserted into the test tube labeling apparatus 100 and may determine the label 20 to be attached to the specified test tube 10. The test tube 10 may include a tube 11 in which a sample is stored and a cap 12 that is fastened to the tube 11 to seal the tube 11. The shape of the test tube 10 may include an outer diameter of the test tube 10, a total length of the test tube 10, and a color of the cap 12 of the test tube 10. In an embodiment, when the test tube 10 is specified based only on the total length information of the test tube 10 and/or the color information of the cap 12 of the test tube 10, restrictions necessary to use only the test tube 10 of a specific shape may arise. In addition, when the test tube 10 is specified using only two parameters (e.g., information on the total length of the test tube 10 and information on the color of the cap 12 of the test tube 10), the test tube 10 may be incorrectly specified. Therefore, the wrong label 20 may be attached to the test tube 10. According to various embodiments disclosed in this document, the test tube labeling apparatus 100 may specify the test tube inserted into the test tube labeling apparatus 100 based on the information on the outer diameter of the test tube 10, the total length information of the test tube 10 and the color information of the cap 12 of the test tube 10. In addition to the total length information and the color information of the cap 12 of the test tube 10, the outer diameter information of the tube 11 of the test tube 10 may be additionally considered to specify the test tube 10, and so various types of test tubes 10 may be used in the test tube labeling apparatus 100 unlike the comparative embodiment in which only specified type of test tube 10 is used. In addition, as parameters specifying the test tube 10 (e.g., information on the outer diameter of the tube 11 of the test tube 10) are added, the accuracy of specifying the test tube 10 in the test tube labeling apparatus can be improved. Therefore, the correct label 20 can be attached to the test tube 10. In the following, first, a configuration and a method for identifying the information on the outer diameter of the test tube 10 through the device 100 will be described in detail, and a configuration and a method for identifying the total length information of the test tube 10 and the color information of the cap 12 of the test tube 10 will be described later.

According to various embodiments, a contact sensor 230 may be disposed on the body 101 of the test tube labeling apparatus 100. The contact sensor 230 may be fixed to the body 101 (e.g., the cover member 111). In an embodiment, with reference to FIG. 3c, the contact sensor 230 may be fixed to the cover member 111 and be contacted with the test tube 10 disposed in the seating portion 200. For example, the contact sensor 230 may be rotatably fixed to the body 101 at a position corresponding to the upper portion of the seating portion 200 (e.g., the second area 202 and/or the third area 203 of the seating portion 200), and it may detect a contact with the test tube 10 seated on the seating portion 200. In an embodiment, the contact sensor 230 may include a second lever 231 movable relative to the body 101. As shown in FIG. 3c, the second lever 231 may be pressed through physical contact with the test tube 10. In the contact sensor 230, a contact signal may be generated as the second lever 231 is contacted with the test tube 10 and is pressed.

According to various embodiments, the processor may operate the rotation driving unit 240 so that the seating portion 200 on which the test tube 10 is seated rotates with respect to the body 101 based on the detection signal of the detection sensor 220. As the test tube 10 rotates with respect to the body 101 together with the seating portion 200, it may be contacted with the contact sensor 230 fixed to the body 101. The contact sensor 230 may be disposed on the body 101 to contact the tube 11 of the test tube 10. In the contact sensor 230, a contact signal may be generated as the second lever 231 is contacted with the tube 11 of the test tube 10 and is pressed. The contact signal may be generated from the contact sensor 230 at the same time when the contact sensor 230 and the test tube 10 come into contact. For example, the contact signal may be generated simultaneously when the second lever 231 of the contact sensor 230 is pressed by the tube 11 of the test tube 10. The processor may receive the touch signal generated by the touch sensor 230. The processor may receive rotation angle information of the rotation driving unit 240 from the angle sensor 210 based on the received contact signal. For example, the processor may receive rotation angle information from the angle sensor 210 when the touch signal is generated by the touch sensor 230. The rotation angle information may be the angle of the rotation of the seating portion 200 or the rotation driving unit 240 from the time when the rotation driving unit 240 starts driving the rotation based on the detection signal received by the processor to the time when the contact signal is generated in the contact sensor 230. In other words, when receiving a contact signal from the contact sensor 230, the processor may receive from the angle sensor 210 the rotation angle information of the rotation driving unit 240 from the time when the rotation driving unit operates based on the detection signal of the detection sensor 220 to the time when the contact signal is received. The processor may identify the rotation angle information of the seating portion 200 based on the rotation angle information of the rotation driving unit 240 received from the angle sensor 210. The processor may identify information on the outer diameter of the tube 11 of the test tube 10 based on the received degree of rotation angle information. For example, the processor may identify information on the outer diameter of the tube 11 of the test tube 10 by comparing the received rotation angle information with a pre-stored value. Here, the pre-stored value as a numerical value stored in a memory connected to the processor may be a numeral value for the outer diameter of the tube 11 of the test tube 10 according to rotation angle information of the seating portion 200. For example, the numerical value pre-stored in the memory may be the period from the time when the rotation driving unit 240 starts driving the rotation to the time when the contact signal is generated in the contact sensor 230, the rotation angle information of the seating portion 200 or the rotation driving unit 240 matching with the period, or the value for the outer diameter of the tube 11 of the test tube 10 that matches the rotation angle information. The processor may determine the outer diameter of the tube 11 of the test tube 10 by comparing the rotation angle information of the seating portion 200 detected by the angle sensor 210 with the rotation angle information value stored in the memory. The processor may specify the test tube 10 inserted into the test tube labeling apparatus 100 by comparing the determined outer diameter of the tube 11 of the test tube 10 with pre-stored test tube identification information and determine the label 20 to be attached to the test tube 10 based on the specified test tube 10. The test tube identification information may be information for specifying the test tube 10, information on the outer diameter of the tube 11 of the test tube 10 pre-stored in in the memory connected to the processor, information on the total length of the test tube 10, or a numerical value for color information of the cap 12 of the test tube 10. The test tube labeling apparatus 100 may identify the test tube 10 inserted into the test tube labeling apparatus 100 based on the test tube identification information stored in the memory. Therefore, an operation of specifying the label 20 used for the test tube 10 through the test tube labeling apparatus 100 and attaching the label 20 to the test tube 10 may be automated.

In an embodiment, rotation angle information of the rotation driving unit 240 may be determined in various ways. In an embodiment, as described above, an encoder may be connected to the rotation driving unit 240 to detect rotation angle information of the driving shaft 241 of the rotation driving unit 240. In some embodiments, the processor may calculate the rotation angle information of the rotation shaft 241 based on the rotation speed and rotation time of the driving shaft 241 of the rotation driving unit 240 from the time when the rotation driving unit 240 starts driving the rotation to the time when the contact sensor 230 generates the contact signal.

According to various embodiments disclosed in this document, the test tube 10 inserted into the test tube labeling apparatus 100 may be specified by measuring the outer diameter of the tube 11 of the test tube 10. Therefore, the processor may specify the test tube 10 inserted into the test tube labeling apparatus 100 based on information (e.g., test tube identification information) on the outer diameter of the tube 11 of various types of test tubes 10 pre-stored in the memory.

In an embodiment, the seating portion 200 identified by the processor through the angle sensor 210 may have the following relationship. For example, when rotation angle information of the rotation driving unit 240 is a first angle, the processor may determine the first outer diameter of the test tube 10. In addition, when rotation angle information of the rotation driving unit 240 is a second angle greater than the first angle, the processor may determine the outer diameter of the tube 11 of the test tube 10 as a second outer diameter smaller than the first outer diameter. In summary, the smaller the outer diameter of the tube 11 of the test tube 10 is, the more time may be taken from the time when the rotation driving unit 240 starts driving the rotation based on the detection signal of the detection sensor 220 to the time when the contact signal is generated by the contact between the test tube 10 and the contact sensor 230. Accordingly, rotation angle information of the seating portion 200 may increase. Conversely, as the outer diameter of the tube 11 of the test tube 10 increases, the time taken from the time when the rotation driving unit 240 starts driving the rotation to the time when the contact signal is generated by the contact between the test tube 10 and the contact sensor 230 may decrease. Accordingly, rotation angle information of the seating portion 200 may decrease.

In the above description, for convenience of explanation, it has been described on the premise that the contact sensor 230 is in contact with the tube 11 of the test tube 10, but it is not limited to that the contact sensor 230 and the tube 11 of the test tube 10 have to be in contact. In an embodiment, the contact sensor 230 may be in contact with the cap 12 of the test tube 10. In this case, the processor may identify the outer diameter of the cap 12 of the test tube 10 by comparing rotation angle information of the seating portion 200 with a pre-stored value. Here, the pre-stored numerical value may be a numerical value stored in a memory connected to the processor, and it may be a numerical value for the outer diameter of the cap 12 of the test tube 10 according to rotation angle information of the seating portion 200.

According to various embodiments, as shown in FIGS. 3b and 4, at least a portion of the seating portion 200 may be formed to correspond to the outer appearance of the test tube 10. For example, when the test tube 10 is formed in a cylindrical shape, at least a portion of the seating portion 200 may be concave to have a curvature corresponding to that of the cylindrical test tube 10. Therefore, when the seating portion 200 rotates with respect to the body 101, the test tube 10 may not be separated from the seating portion 200.

According to various embodiments, the test tube 10 may include a tube 11 in which a sample is stored and a cap 12 fastened to the tube 11 to seal the tube 11. With reference to FIG. 4, the seating portion 200 may include a first area 201 that includes a first groove 204-1 and in which the cap 12 is disposed; a second area 202 that includes a second groove 204-2 and in which the end of the tube is disposed; and a third area 203 that is located between the first area 201 and the second area 202 and in which a portion of the tube 11 is disposed.

In an embodiment, the outer diameter of the cap 12 of the test tube 10 may be thicker than the outer diameter of the tube 11 of the test tube 10. According to various embodiments disclosed in this document, as shown in FIG. 4, the first area 201 of the seating portion 200 in which the cap 12 is disposed may be formed to be more concave than the second area 202 and the third area 203 in which the tube 11 is disposed so that the outer diameter difference between the tube 11 and the cap 12 may be reduced. In other words, the third area 203 may be formed closer to the center of the seating portion 200 than the first area 201, and there may be formed a step difference between the first area 201 and the third area 203. The difference between the first area 201 and the third area 203 may compensate for the difference between the outer diameter of the cap 12 and the outer diameter of the tube 11 of the test tube 10.

As described above, when it is identified that the test tube 10 is inserted into the inlet portion 110 through the detection signal generated by the detection sensor 220, the processor may control the rotation driving unit 240 connected to the seating portion 200 and rotate the seating portion 200 with respect to the body 101. However, if the entire test tube 10 is not seated on the seating portion 200, damage to the test tube 10 may occur. In an embodiment, the test tube 10 may be inserted in an inclined state with respect to the seating portion 200 while being inserted into the inlet portion 110. For example, the test tube 10 may be inclined with respect to the seating portion 200 such that only the cap 12 of the test tube 10 or only the tube 11 is disposed on the seating portion 200. In this case, the test tube 10 may be sandwiched between the seating portion 200 and the body 101 by rotation of the seating portion 200. Thus, damage to the test tube 10 may occur.

With reference to FIG. 4 in various embodiments disclosed in this document, the seating portion 200 may include a first area 201 in which the cap 12 of the test tube 10 is disposed and a groove 204 formed in the second area 202 in which the end of the tube 11 is disposed. The groove 204 may include a first groove 204-1 formed in the first area 201 and a second groove 204-2 formed in the second area 202. The first area 201 and the second area 202 of the seating portion 200 may be formed in a shape dug into the third area 203 through the groove 204. In an embodiment, the first groove 204-1 and the second groove 204-2 may have different shapes. The third area 203 of the seating portion 200 may protrude from the first area 201 and the second area 202. As described above, the test tube 10 may be disposed inclined with respect to the seating portion 200, such as when only the cap 12 is disposed on the seating portion 200. In this case, as the groove 204 is formed in the first area 201 of the seating portion 200, the cap 12 of the test tube 10 may be prevented from being caught between the seating portion 200 and the body 101 by rotation of the seating portion 200. Thus, damage to the test tube 10 may be prevented. In addition, the test tube 10 may be disposed inclined with respect to the seating portion 200, such as when only the tube 11 of the test tube 10 is disposed on the seating portion 200. In this case, as the groove 204 is formed in the second area 202 of the seating portion 200, the tube 11 of the test tube 10 may be prevented from being caught between the seating portion 200 and the body 101 by rotation of the seating portion 200. Thus, damage to the test tube 10 may be prevented.

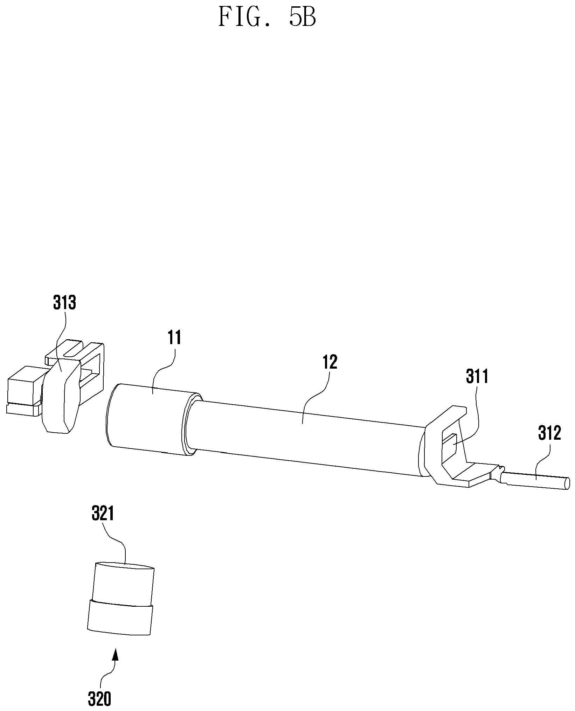

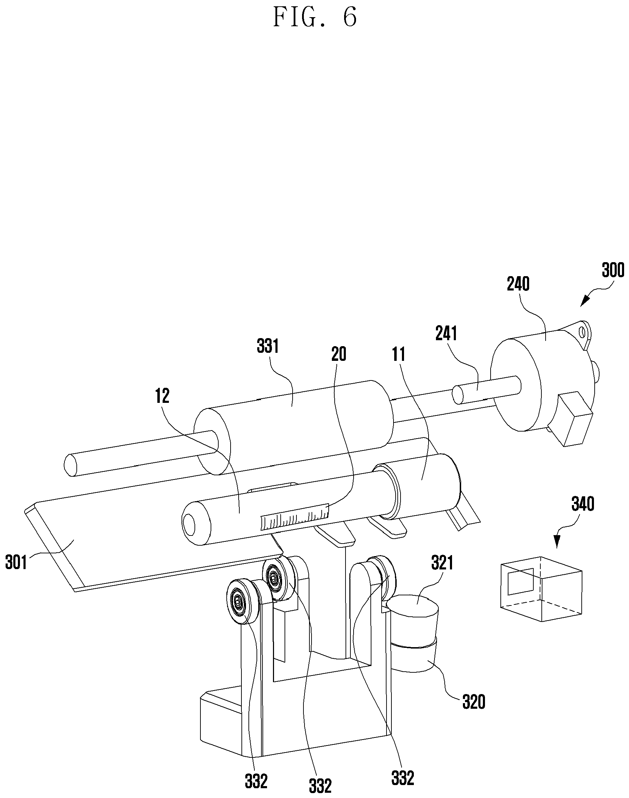

FIG. 5a is a front perspective view of a labeling module 300 of a test tube labeling apparatus 100 according to various embodiments disclosed in this document. FIG. 5b is a diagram illustrating a length measuring device 310 according to various embodiments disclosed in this document. FIG. 6 is a rear perspective view of the labeling module 300 of the test tube labeling apparatus 100 according to various embodiments disclosed in this document.

According to various embodiments, the test tube 10 may move to the tray 301 through rotation of the seating portion 200. The tray 301 may be an instrument on which the test tube 10 moved through the seating portion 200 is seated. In an embodiment, the tray 301 may be coupled with a motor (not shown) connected to the processor. With reference to FIG. 5a, when the label 20 is attached to the test tube 10, the processor may open the tray 301 by controlling a motor connected to the tray 301. When the tray 301 is opened, the inside of the test tube labeling apparatus 100 may be connected to the outlet portion 120, which is a passage through which the test tube 10 is discharged to the outside of the test tube labeling apparatus 100. The test tube 10 may pass through the outlet portion 120 inside the test tube labeling apparatus 100, be discharged to the outside of the test tube labeling apparatus 100 and be seated on the supporting part 130.

According to various embodiments, as shown in FIG. 5a, the test tube labeling apparatus 100 may include a labeling module 300. The labeling module 300 may include a length measuring device 310 that measures the total length of the test tube 10 and a camera 320 that captures the color of the cap 12 of the test tube 10. The length measuring device 310 and the camera 320 may be electrically connected to the processor. The processor may identify the total length of the test tube 10 by controlling the length measuring device 310 and identify the color of the cap 12 of the test tube 10 by controlling the camera 320. The processor according to various embodiments disclosed in this document may specify the test tube inserted into the test tube labeling apparatus 100 by comparing the identified outer diameter of the tube 11, total length of the test tube 10 and color of the cap 12 of the test tube 10 with the test tube identification information including the total length of the test tube 10 by the shape of the test tube 10, the outer diameter of the tube 11 of the test tube 10 and the color of the cap 12 of the test tube 10. The processor may determine the label 20 to be used for the test tube 10 based on the specified test tube 10. As described above, the processor can identify the outer diameter of the tube 11 of the test tube 10 through the contact sensor 230 and the angle sensor 210. Hereinafter, a method of measuring the total length of the test tube 10 and a process of identifying the color of the cap 12 of the test tube 10 will be described in detail.

According to various embodiments, a second optical sensor (not shown) may be disposed on the body 101 at a position adjacent to the tray 301. The processor may receive a signal generated by the second optical sensor as the test tube 10 is seated on the tray. The processor may identify that the test tube 10 is seated on the tray 301 based on the received signal. For example, in the second optical sensor, a signal may be generated when light generated from a light emitting unit of the second optical sensor is reflected by the test tube 10 and is incident to a light receiving unit of the second optical sensor. The processor may identify that the test tube 10 is seated on the tray 301 based on the signal generated by the second optical sensor. In this case, the processor may control the length measuring device 310 to identify information on the total length of the test tube 10.

According to various embodiments, the length measuring device 310 may include a pressing unit 311, a pin 312 connected to the pressing unit 311, and an actuator 313. The pin 312 may be connected to the pressing part 311 to move the test tube 10 in one direction. For example, with reference to FIG. 5b, the pin 312 may press one end of the test tube 10 through the pressing part 311 to advance and retreat with respect to the body 101. The processor may move the test tube 10 in one direction by controlling the pin 312 so that the other end of the test tube 10 faces the lens 321 of the camera 320. Here, one end of the test tube 10 may be the end of the tube 11, and the other end of the test tube 10 may be the cap 12. The actuator 313 may be contacted with the test tube 10 that is fixed to the body 101 and moved through the pressing part 311. The actuator 313 may be connected to the spring 314 fixed to the body 101. Accordingly, the actuator 313 may be contacted with the test tube 10 and be pressed. For example, the actuator 313 may be pressed in contact with the cap 312 located at the other end of the test tube 10. The actuator 313 may generate a signal when it is pressed in contact with the cap 12 of the test tube 10. The processor may receive a signal generated by the actuator 313. Based on the received signal, the processor may determine, from the length measuring device 310, the distance the pin 312 moves until a signal is generated in the actuator 313. The processor may identify information on the total length of the test tube 10 by comparing the identified movement distance of the pin 312 with a pre-stored value. Here, the pre-stored numerical value may be a numerical value stored in a memory connected to the processor, and it may be a numerical value for the total length of the test tube 10 according to the moving distance of the pin 312. The processor may specify the test tube 10 by comparing the total length of the identified test tube 10 with test tube identification information stored in the memory.

According to various embodiments, the processor may control the camera 320 based on a signal generated by contact between the actuator 313 and the cap 12 of the test tube 10. The processor may control the camera 320 to photograph the cap 12 of the test tube 10 facing the lens 321 of the camera 320. The processor may identify the color of the cap 12 of the test tube 10 based on the captured image of the cap 12 of the test tube 10. The processor may specify the test tube 10 by comparing the color information of the cap 12 of the identified test tube 10 with the test tube identification information stored in the memory.

The total length of the test tube 10, the outer diameter of the tube 11 of the test tube 10, the color of the cap 12 of the test tube 10 may differ depending on the manufacturer of the test tube 10. When the test tube 10 is specified only with the information on the total length of the test tube 10 and the color information of the cap 12 of the test tube 10, there is a restriction that only a test tube 10 of a specific type manufactured by a specific manufacturer must be used. The type of test tube 10 that can be used in the labeling apparatus 100 could be limited. In addition, when the test tube 10 is specified using only information on the total length of the test tube 10 and information on the color of the cap 12 of the test tube 10 as parameters, the test tube 10 may be incorrectly specified. In this case, the label 20 to be attached to the test tube 10 may not be attached.

According to various embodiments disclosed in this document, the processor may identify the outer diameter of the tube 11 of the test tube 10 through the angle sensor 210 and the contact sensor 230. In addition, the processor may identify the total length of the test tube 10 through the length measuring device 310. In addition, the processor may identify the color of the cap 12 of the test tube 10 by controlling the camera 320. The processor may specify the test tube 10 inserted into the test tube labeling apparatus 100 by comparing the identified outer diameter of the tube 11 of the test tube 10, the total length of the test tube 10, and the color of the cap 12 of the test tube 10 with the outer diameter information of the test tube 10, the total length information of the test tube 10, and the cap 12 color information of the test tube 10 stored in advance for each test tube 10. The processor may determine the label 20 to be attached to the test tube 10 based on the specified test tube 10. For example, the processor may identify labeling information corresponding to the identified test tube 10 to determine the label 20 to be attached to the test tube 10. The processor may control the label attaching device 330 so that the label 20 on which corresponding labeling information is printed is attached to the test tube 10. Therefore, unlike the comparative embodiment in which only a specific type of test tube 10 was used in the test tube labeling apparatus 100, various types of test tubes 10 may be used in the test tube labeling apparatus 100.

In addition, as a parameter specifying the test tube 10 (e.g., the outer diameter of the test tube 10 or the tube 11) is added, the accuracy of specifying the test tube 10 in the test tube labeling apparatus 100 can be improved.

Accordingly, the correct label 20 can be attached to the test tube 10 based on the specified test tube 10.

In the above, although it is described that the test tube labeling apparatus 100 specifies the test tube 10 considering the outer diameter information of the tube 11 of the test tube 10, the total length information of the test tube 10, and the color information of the cap 12 of the test tube 10, it is not necessarily limited thereto. In some cases, the test tube labeling apparatus 100 may specify the test tube 10 inserted into the test tube labeling apparatus based on at least one of outer diameter information of the tube 11 of the test tube 10, total length information of the test tube 10, and color information of the cap 12 of the test tube 10.

According to various embodiments, a label attaching device 330 may be disposed on the body 101. A label 20 may be attached to the test tube 10 through the label attaching device 330. In an embodiment, with reference to FIGS. 5a and 6, the label attaching device 330 may include a labeling roller 331 and a moving device 332. The processor may determine the test tube 10 based on the specified test tube 10 by considering the outer diameter information of the tube 11 of the test tube 10, the total length information of the test tube 10, and the color information of the cap 12 of the test tube 10. A label 20 to be attached can be determined. When the label 20 to be attached to the test tube 10 is determined, the processor may transfer the label 20 to be attached to the test tube 10 to the labeling roller 331 of the label attaching device 330. When the label 20 to be attached to the test tube 10 is determined, the processor may control the moving device 332 to move the test tube 10 seated on the tray 301 to be adjacent to the labeling roller 331. The processor may control a motor (not shown) connected to the labeling roller 331 to rotate the labeling roller 331 relative to the test tube 10. The test tube 10 may be in contact with the label 20, and the label 20 may be attached to the test tube 10 as the labeling roller 331 rotates with respect to the test tube 10.

In an embodiment, the movement device 332 may include a roller rotatable relative to the test tube 10. The roller may rotate together with the test tube 10 as the test tube 10 rotates in contact with the labeling roller 331.

According to various embodiments, the test tube labeling apparatus 100 may include a scanner 400 electrically connected to the processor. The processor may control the scanner 400 to scan the barcode included in the label 20 attached to the test tube 10. In an embodiment, when the barcode of the label 20 attached to the test tube 10 is recognized through the scanner 400, the processor may control the tray 301 so that the test tube 10 may be discharged to the outside of the test tube labeling apparatus 100. Conversely, if the label 20 attached to the test tube 10 is crumpled, the barcode of the label 20 may not be recognized by the scanner 400. When the barcode of the label 20 is not recognized by the scanner 400, the processor may control an audio output module (not shown) included in the test tube labeling apparatus 100. Accordingly, a warning sound may be generated in the sound output module. Also, the processor may output a warning light or a flashing light to the information display unit 150. Accordingly, it is possible to make the user aware that the label 20 is erroneously attached to the test tube 10.

The test tube labeling apparatus 100 for attaching a label 20 to a test tube 10 including a tube 11 and a cap 12 fastened to the tube according to various embodiments disclosed in this document may include a body 101; a seating portion 200 where test tubes 10 inserted into the test tube labeling apparatus 100 are seated and at least a portion of the seating portion 200 is formed to correspond to the outer appearance of the test tube; a rotation driving unit 240 that rotates the seating portion relative to the body in response to the test tube being seated on the seating portion; a contact sensor 230 that is rotatably fixed with respect to the body at a position corresponding to the upper portion (e.g., the second space 202 and/or the third space 203 of the seating portion 200) of the seating portion and detects a contact with the test tube seated in the seating portion; an angle sensor 210 for measuring rotation angle information of the rotation driving unit; a label attaching device 330 located inside the body and attaching a label to the test tube; and a processor (not shown) operatively coupled to the rotation driving unit, the contact sensor, the angle sensor, and the label attaching device, wherein the contact sensor generates a contact signal when the test tube contacts with the contact sensor because of rotation of the seating portion, the angle sensor generates rotation angle information of the angle at which the rotation driving unit has rotated during a period from the time when the rotation driving unit starts driving the rotation in response to the test tube being seated on the seating portion to the time when the contact sensor generates a contact signal, and the processor receives the rotation angle information generated by the angle sensor, identifies the outer diameter information of the test tube based on the received rotation angle information, identifies the test tube by comparing the identified outer diameter information with the test tube identification information stored in advance, identifies the labeling information corresponding to the identified test tube, and controls the labeling apparatus so that the label 20 printed with the identified test tube labeling information may be attached to the identified test tube.

In addition, the test tube identification information may include information on the total length of the test tube, information on the outer diameter of the test tube, and information on the color of the cap of the test tube.

In addition, the processor may determine the outer diameter of the test tube as the first outer diameter when the rotation angle information is a first angle, and it may determine the outer diameter of the test tube as the second outer diameter smaller than the first out diameter when the rotation angle information is a second angle greater than the first angle.

In addition, the processor may identify the outer diameter of the test tube by comparing the received rotation angle information with a pre-stored value.

In addition, the body may include an inlet portion 110 including an inclined surface 112 formed so that the test tube is guided to the seating portion and into which the test tube is inserted, and it may further include a detection sensor 220 disposed on the body and connected to the processor to detect that the test tube is inserted into the inlet portion, wherein the processor receives the detection signal generated according to the insertion of the test tube from the detection sensor and controls the rotation driving unit to rotate the seating portion with respect to the body from the time when the detection signal is received.

In addition, the contact sensor may include a lever (e.g., the second lever 231 of FIG. 3c) movable with respect to the body, and the contact signal of the contact sensor may occur as the lever is pressed in contract with the test tube.

In addition, the seating portion may include a first area 201 including a first groove 204-1 and in which the cap is disposed; a second area 202 including a second groove 204-2 and in which the end of the tube is disposed; and a third area 203 located between the first area and the second area and in which a portion of the tube is disposed.

In addition, the third area of the seating portion may be formed closer to the center of the seating portion than the first area, so that a step may be formed between the first area and the third area.

In addition, the detection sensor may include an optical sensor 223 including a light receiving unit and a light emitting unit.

In addition, the detection sensor may include a physical sensor 222 including a lever (e.g., the first lever 221 of FIG. 3b) movable with respect to the inclined surface, and the detection signal of the detection sensor may be generated as the lever of the physical sensor is pressed in contact with the test tube.

In addition, a tray 301 on which the test tube moved through the rotation of the seating portion is seated may be further included.

In addition, a pin 312 advancing and retracting with respect to the body to contact one end of the test tube and an actuator 313 disposed to contact the other end of the test tube may be included and a length measuring device 310 disposed on the body may be further included.

In addition, the processor may be electrically connected to the length measuring device; receive a signal generated as the actuator is brought into contact with the other end of the test tube from the actuator; determine the moving distance of the pin based on the received signal; identify the length of the test tube by comparing the moving distance of the pin with a pre-stored value; and determine the label 20 attached to the test tube by comparing the identified length of the test tube with the test tube identification information.

In addition, a camera 320 electrically connected to the processor may be further included, and the processor may control the length measuring device so that the other end of the test tube faces the lens 321 of the camera.

In addition, the processor may control the camera to photograph the cap of the test tube located at the other end of the test tube, identify the color of the cap of the test tube based on the captured image of the cap of the test tube, and determine the label 20 to be attached to the test tube by comparing the identified color of the cap of the test tube and the test tube identification information.

In addition, the labeling apparatus may include a labeling roller 331 for attaching the label 20 to the test tube by rotating with respect to the test tube and a moving device 332 for moving the test tube to be adjacent to the labeling roller.

In addition, a scanner 340 electrically connected to the processor and scanning the label 20 attached to the test tube is further included, and the processor may control the scanner to scan the label attached to the test tube, receive a signal generated as the label of the test tube is recognized through the scanner, and control the tray to discharge the test tube to the outside of the test tube labeling apparatus based on the received signal.

The test tube labeling method for attaching a label to a test tube 10 including a tube 11 and a cap 12 fastened to the tube according to various embodiments disclosed in this document may include a step in which, as the test tube 10 is inserted into the body 101 of the test tube labeling apparatus 100, a processor receives a detection signal generated in the detection sensor 220 fixed to the body; a step in which the processor identifies that the test tube is inserted into the body based on the received detection signal; a step in which the processor controls a rotation driving unit 240 connected to a seating portion 200 so that the seating portion where the test tube is seated may be rotated with respect to the body based on the received detection signal; a step in which the processor receives the detection signal generated according to the contact of the contact sensor 230 fixed to the body with the test tube by the rotation of the seating portion; a step in which the processor receives from the angle sensor 210 the rotation angle information of the rotation driving unit from the time when the rotation driving unit starts driving the rotation to the time when the contact signal is generated in the contact sensor; a step in which the processor identifies the outer diameter information of the test tube based on the received rotation angle information; a step in which the test tube is identified by comparing identified the outer diameter information of the test tube with the test tube identification information stored in advance; and a step in which the processor controls a label attaching device 330 located in the inner space of the body so that the labeling information corresponding to the identified test tube may be identified and the label 20 printed with the identified test tube labeling information may be attached to the identified test tube.

In addition, the test tube identification information may include information on the total length of the test tube; information on the outer diameter of the test tube; and information on the color of the cap of the test tube, and a step in which the processor controls the length measuring device 310 included in the body of the test tube labeling apparatus and identifies the total length of the test tube; a step in which the processor controls the camera 320 included in the body of the test tube labeling apparatus and identifies the color of the cap of the test tube; a step in which the processor specifies the test tube by comparing the identified information on the outside diameter of the test tube, the identified total length information of the test tube, and the identified cap color information of the test tube, with the pre-stored test tube identification information; and a step in which the processor identifies labeling information corresponding to the identified test tube and controls the label attaching device located inside the body to attach a label printed with the identified labeling information to the identified test tube, may be included.

Also, embodiments disclosed in the specification and drawings of this document are merely presented as specific examples to easily explain the technical content according to the embodiments of the disclosure and help an understanding of the embodiments of the disclosure, but they are not intended to limit the scope of the embodiments of the disclosure. Therefore, all changes or modifications derived from the technical ideals of the various embodiments of the disclosure should be interpreted to be included in the scope of the various embodiments of the disclosure in addition to the embodiments disclosed in the present document.

## Claims

1. A test tube labeling apparatus for attaching a label to a test tube including a tube and a cap fastened to the tube comprising:
a body;
a seating portion where the test tube inserted into the test tube labeling apparatus is seated, and at least a portion of the seating portion is formed to correspond to the outer appearance of the test tube;
a rotation driving unit for rotating the seating portion with respect to the body in response to the test tube being seated on the seating portion;
a contact sensor rotatably fixed with respect to the body at a position corresponding to an upper portion of the seating portion and detecting a contact with the test tube seated on the seating portion;
an angle sensor measuring rotation angle information of the rotation driving unit;
a label attaching device positioned inside the body and attaching a label to the test tube; and
a processor operatively connected to the rotation driving unit, the contact sensor, the angle sensor, and the label attaching device, wherein
the contact sensor generates a contact signal when the test tube is contacted with the contact sensor because of rotation of the seating portion,
the angle sensor generates rotation angle information of the angle at which the rotation driving unit has rotated during a period from the time when the rotation driving unit starts driving the rotation in response to the test tube being seated on the seating portion to the time when the contact sensor generates a contact signal, and
the processor receives rotation angle information generated from the angle sensor, identifies information on the outer diameter of the test tube based on the received rotation angle information, identifies the test tube by comparing information on the outer diameter of the identified test tube with pre-stored test tube identification information, identifies the labeling information corresponding to the identified test tube, and controls the label attaching device so that the label attaching device may attach a label printed with the identified labeling information to the identified test tube.

2. The test tube labeling apparatus of claim 1, wherein
the test tube identification information comprises information on the total length of the test tube, information on the outer diameter of the test tube, and information on the color of the cap of the test tube.

3. The test tube labeling apparatus of claim 1, wherein
the processor determines the outer diameter of the test tube as a first outer diameter in the case that the rotation angle information is a first angle and
determines the diameter of the test tube as a second outer diameter smaller than the first outer diameter when the rotation angle information is the second angle greater than the first angle.

4. The test tube labeling apparatus of claim 1, wherein
the processor identifies the outer diameter of the test tube by comparing the received rotation angle information and the pre-stored numerical value.

5. The test tube labeling apparatus of claim 1, wherein
the body comprises an inlet portion including an inclined surface formed to guide the test tube to the seating portion and into which the test tube is inserted, and
it further comprises a detection sensor disposed on the body and connected to the processor to detect that the test tube is inserted into the inlet, wherein
the processor receives a detection signal generated according to the insertion of the test tube from the detection sensor and
controls the rotation driving unit to rotate the seating portion with respect to the body from the time when the detection signal is received.

6. The test tube labeling apparatus of claim 1, wherein
the contact sensor comprises a lever movable relative to the body, and the contact signal of the touch sensor is generated when the lever is pressed in contact with the test tube.

7. The test tube labeling apparatus of claim 1, wherein
the seating portion comprises:
a first area including a first groove and in which the cap is disposed;
a second area including a second groove and in which the end of the tube is disposed; and
a third area located between the first area and the second area and in which a portion of the tube is disposed.

8. The test tube labeling apparatus of claim 7, wherein
the third area of the seating portion is formed closer to the center of the seating portion than the first area, and
a step is formed between the first area and the third area.

9. The test tube labeling apparatus of claim 5, wherein
the detection sensor comprises an optical sensor including a light receiving unit and a light emitting unit.

10. The test tube labeling apparatus of claim 5, wherein
the detection sensor comprises a physical sensor including a lever movable with respect to the inclined surface, and
the detection signal of the detection sensor is generated when the lever of the physical sensor is pressed in contact with the test tube.

11. The test tube labeling apparatus of claim 1 further comprising a tray on which the test tube moved by the rotation of the seating portion is seated.

12. The test tube labeling apparatus of claim 1 comprising a pin advancing and retracting with respect to the body to contact one end of the test tube and an actuator disposed to contact the other end of the test tube, and further comprising a length measuring device disposed on the body.

13. The test tube labeling apparatus of claim 12, wherein
the processor is electrically connected to the length measuring device;
receives a signal generated as the actuator is brought into contact with the other end of the test tube from the actuator;
determines a movement distance of the pin based on the received signal;
identifies the length of the test tube by comparing the moving distance of the pin with a pre-stored value; and
determines a label attached to the test tube by comparing the length of the identified test tube with the test tube identification information.

14. The test tube labeling apparatus of claim 12 further comprising a camera electrically connected to the processor, wherein
the processor controls the length measuring device so that the other end of the test tube faces the lens of the camera.

15. The test tube labeling apparatus of claim 14, wherein
the processor controls the camera to photograph the cap of the test tube located at the other end of the test tube;
identifies the color of the cap of the test tube based on the captured image of the cap of the test tube; and
determines a label attached to the test tube by comparing the identified test tube cap color with the test tube identification information.

16. The test tube labeling apparatus of claim 1, wherein
the label attaching device comprises a labeling roller that rotates relative to the test tube to attach a label to the test tube and a moving device that moves the test tube to be adjacent to the labeling roller.

17. The test tube labeling apparatus of claim 11 further comprising a scanner electrically connected to the processor and scanning a label attached to the test tube, wherein
the processor
scans a label attached to the test tube by controlling the scanner;
receives a signal generated as the label of the test tube is recognized through the scanner from the scanner; and
controls the tray so that the test tube is discharged out of the test tube labeling apparatus based on the received signal.

18. A method for attaching a label to a test tube including a tube and a cap fastened to the tube, the method comprising:
receiving, by a processor, a detection signal generated from a detection sensor fixed to the body as the test tube is put into the body of the test tube labeling apparatus;
identifying, by the processor, that the test tube is put into the body based on the received detection signal;
controlling, by the processor, a rotation driving unit connected to the seating portion to rotate the seating portion on which the test tube is seated with respect to the body based on the received detection signal;
receiving, by the processor, a contact signal generated according to contact between the test tube and the contact sensor fixed to the body by the rotation of the seating portion from the contact sensor;
receiving, by the processor, rotation angle information of the rotation driving unit from an angle sensor from a time when the rotation driving unit starts driving the rotation to a time when a contact signal is generated in the touch sensor;
identifying, by the processor, outer diameter information of the test tube based on the received rotation angle information;
identifying the test tube by comparing information on the outer diameter of the identified test tube with pre-stored test tube identification information; and
controlling a labeling apparatus located inside the body to identify labeling information corresponding to the identified test tube and attach a label printed with the identified labeling information to the identified test tube.

19. The method of claim 18, wherein
the test tube identification information comprises including information on the total length of the test tube, information on the outer diameter of the test tube, and information on the color of the cap of the test tube, and comprising:
identifying, by the processor, a total length of the test tube by controlling a length measuring device included in a body of the test tube labeling apparatus;
identifying, by the processor, the color of the cap of the test tube by controlling a camera included in the body;
identifying, by the processor, the test tube by comparing information on the outer diameter of the test tube, information on the total length of the test tube, and information on the color of the cap of the test tube with pre-stored test tube identification information; and
controlling a label attaching device located inside the body to identify labeling information corresponding to the identified test tube and attach a label printed with the identified labeling information to the identified test tube.
